# EUROPEAN PATENT SPECIFICATION

(11) **EP 4 350 233 B1**
(45) Date of publication and mention of the grant of the patent: **06.08.2025**
(21) Application number: 23200464.8
(22) Date of filing: 28.09.2023
(51) Int. Cl.: F24F 8/15, F24F 8/80, F24F 8/95, B01D 53/02, B01D 53/62, B01D 53/78

(54) **AN AIR PURIFIER COMPRISING AN EXHAUST OUTLET LINE**
LUFTREINIGER MIT EINER ABGASAUSLASSLEITUNG
PURIFICATEUR D'AIR COMPRENANT UNE LIGNE DE SORTIE D'ÉCHAPPEMENT

(30) Priority: 07.10.2022 TR 202215359
(43) Date of publication of application: 10.04.2024
(73) Proprietor: Arçelik Anonim Sirketi, 34445 Istanbul (TR)
(72) Inventor: OZTURK, TANSEL, 34445 ISTANBUL (TR); TARKUC, SIMGE, 34445 ISTANBUL (TR); KAYISDAG, VAROL, 34445 ISTANBUL (TR); BEYAZKILINC, OZGE, 34445 ISTANBUL (TR); CALAPKULU, YASEMIN, 34445 ISTANBUL (TR)

(56) References cited:
- EP-A1- 4 029 591
- EP-A1- 4 062 999
- EP-A1- 4 067 762
- WO-A1-2022/098326

## Description

The present invention relates to an air purifier which has a safe exhaust outlet line and which does not perform air purification until the exhaust outlet line connection is safely completed.

Today, the need for ventilation and the need for fresh air becomes more important in environments such as homes and offices especially in high-rise buildings. Plants can be a temporary solution for daytime but when the sunlight disappears, plants also start to produce carbon dioxide like human beings and the air quality of the environment decreases. Especially in high-rise buildings, it is not always possible to continuously keep the windows open and ventilate the environment. The continuously rising carbon dioxide amount in the air adversely affects human health. The amount of oxygen in a closed environment directly affects the metabolic rate of people and the lack thereof creates weakness and fatigue in humans. Ensuring that the amount of oxygen in the closed environment does not fall below a certain level while reducing the amount of carbon dioxide generated in the environment makes the human metabolism much more vivid and vigorous.

In the state of the art, there are air purifiers having modules which generate oxygen from carbon dioxide in the environment, also known as artificial photosynthesis modules. Exhaust ports are known in such devices which enable the removal of waste gases. However, in such devices, the two-piece exhaust line for transmitting waste gases to the outside of the indoor environment where the purified air is present and the operation of the air purifier according to the connection of the exhaust line are not known.

In another type of state of the art air purifiers, there is at least one HEPA, UV, active carbon and any other type of filter which retain matter in the ambient air such as dust, dirt and bacteria. The air purified in such devices is released directly to the environment (indoor environment). Since there is no chemical treatment, there is no exhaust outlet line.

EP 4 062 999 discloses an air purifier upon which the preamble of appending claim 1 is based.

The air purifier of the present invention comprises an air inlet through which the ambient air is sucked; a pump which provides the suction of the air; a carbon dioxide adsorption unit into which the sucked air is drawn; a base tank which allows a basic solution to be sent to the carbon dioxide adsorption unit; and an acid tank wherein the acidic solution is loaded, which is used in chemical reactions to re-release the carbon dioxide adsorbed in the carbon dioxide adsorption unit. The air purifier of the present invention further comprises a clean air outlet which enables the clean air cleansed of carbon dioxide to spread to the environment (indoor environment from which the air is sucked into device body), and an exhaust outlet line which enables harmful waste gases such as carbon dioxide and hydrogen released by means of the acidic solution after the air is purifier to the outside of the indoor environment (through a window or wall).

In an embodiment of the present invention, the basic solution is loaded directly into the carbon dioxide adsorption unit in the air purifier. In this embodiment, there may also be a basic solution tank and the basic solution can be fed to the carbon dioxide adsorption unit as needed. In another embodiment, the basic solution can be fed to the carbon dioxide adsorption unit from outside by warning the user or by the technical service staff at certain times without providing a basic solution tank.

In another embodiment of the present invention, the basic solution can be sent to the carbon dioxide adsorption unit in the air purifier from the base tank when the air purifier is operated.

In the air purifier of the present invention, the air sucked into the body of the air purifier by means of a pump is taken into the CO₂ adsorption unit. Here, the air reacts with the basic solution into a carbonation reaction. As a result of this reaction, the clean air cleansed of carbon dioxide is released from the from the CO₂ adsorption unit to the indoor environment through an air outlet line. The carbonate solution remaining in the adsorption unit is taken into a mixture receptacle for treatment with an acidic solution. The acidic solution is fed into said receptacle, and the adsorbed carbon dioxide and other gases are released again as a result of the reaction. Moreover, a salt solution is generated by the mixture of acidic and basic solutions. The resulting salt solution is converted back to acid and base in an electrodialysis unit. The separated chemicals are transferred back to the acid and base tanks. Thus, an air purifier is realized, which is closed to outside intervention and which operates continuously. Harmful, waste gases such as carbon dioxide and hydrogen released are discharged through a pierced window or wall by means of an exhaust outlet line, to the outside of the indoor environment such as room, workplace, etc., where the air is purified.

An indoor environment is any enclosed, walled area within a building, such as room or workplace, where the air is to be purified.

The outer environment is the open space outside the walls and window, remaining outside the boundaries of the indoor environment.

The exhaust outlet line has a two-piece structure, an inner part and an outer part. While the inner part is placed in the indoor environment where the air is to be purified, the outer part attached to the inner part opens to the outer environment.

The inner part comprises an inlet pipe through which the waste gases enter, a cable which extends in or on the inlet pipe and which is connected to the control unit at one end, a pin which is disposed at the end of the cable, and a locking part. The locking part connects the inner part with the outer part. There is an interconnecting part provided at the section of the outer part closest to the inner part. The locking part and the interconnecting part can be attached to/detached from each other. When the inner part is to be attached to the outer part, the pin passes through pin housings provided on the locking part and gets into contact with at least one metal plate in the outer part provided on the interconnecting part. Thus, the signal stating that the inner and outer parts are connected is transmitted to the control unit. When said signal is transmitted, the air purifier starts to operate. Otherwise, the air purifier does not work unless the connection is made correctly and the signal is transmitted.

By means of the present invention, an air purifier is realized, wherein the waste gas is discharged safely and the air purification process cannot be performed without properly connecting the exhaust outlet line.

The model embodiments that relate to the air purifier realized in order to attain the aim of the present invention are illustrated in the attached figures, where:

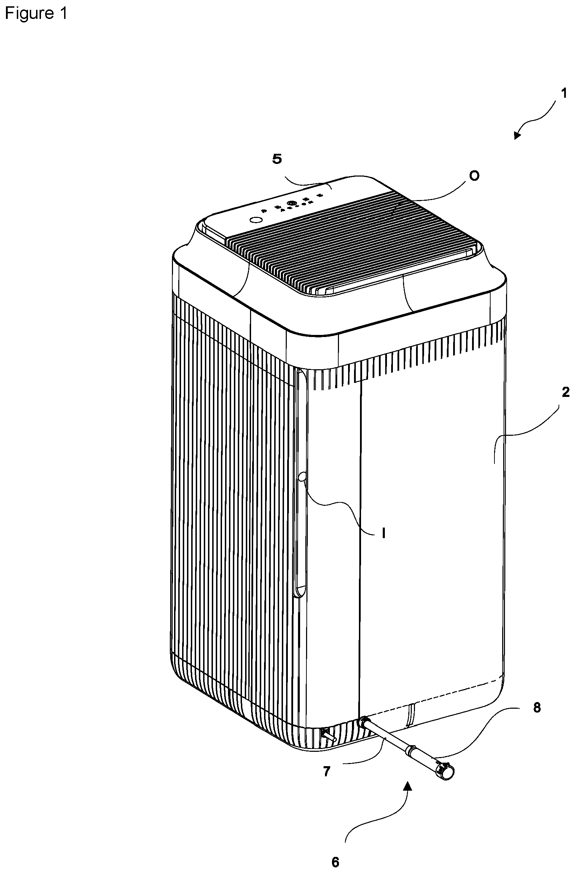

**Figure 1** - is the perspective view of the air purifier in an embodiment of the present invention.

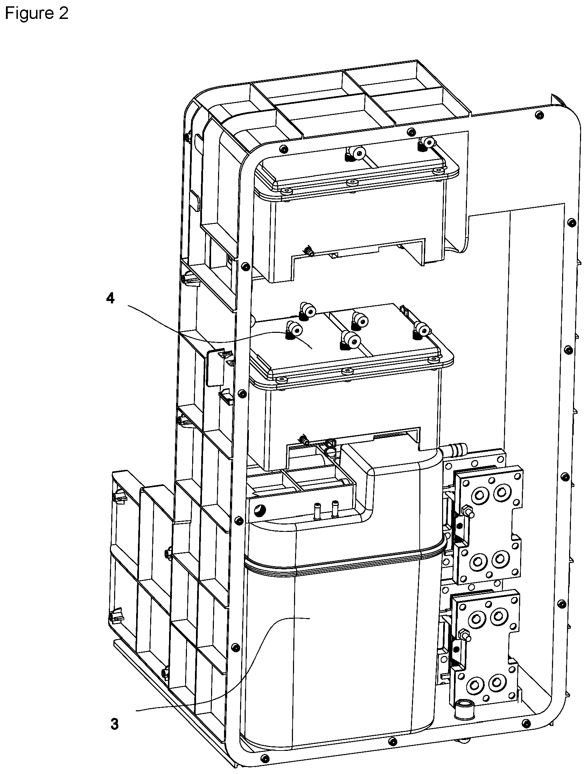

**Figure 2** - is the perspective view showing the inside of the air purifier in an embodiment of the present invention.

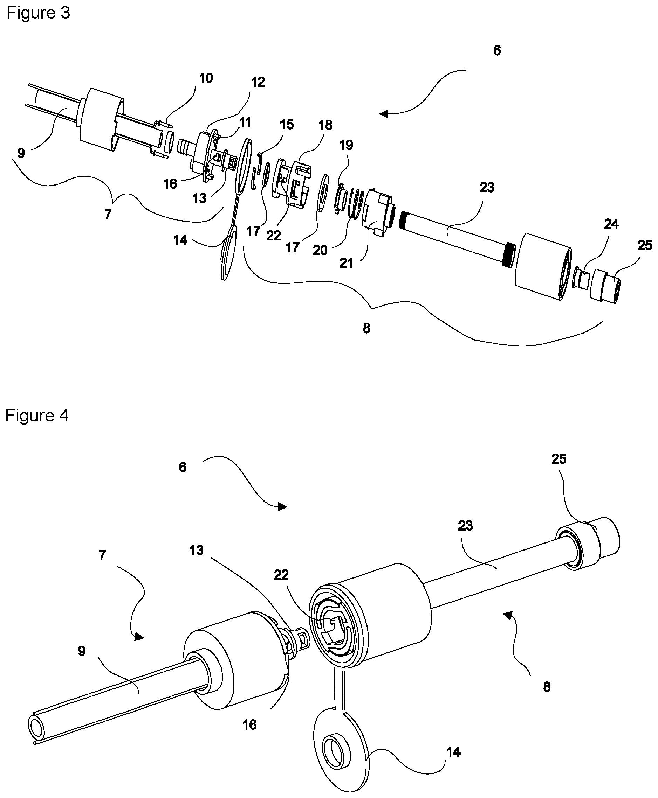

**Figure 3** - is the exploded view of the exhaust outlet line in the air purifier in an embodiment of the present invention.
**Figure 4** - is the perspective view showing the state before the inner and outer parts forming the exhaust outlet line are connected in the air purifier in an embodiment of the present invention.

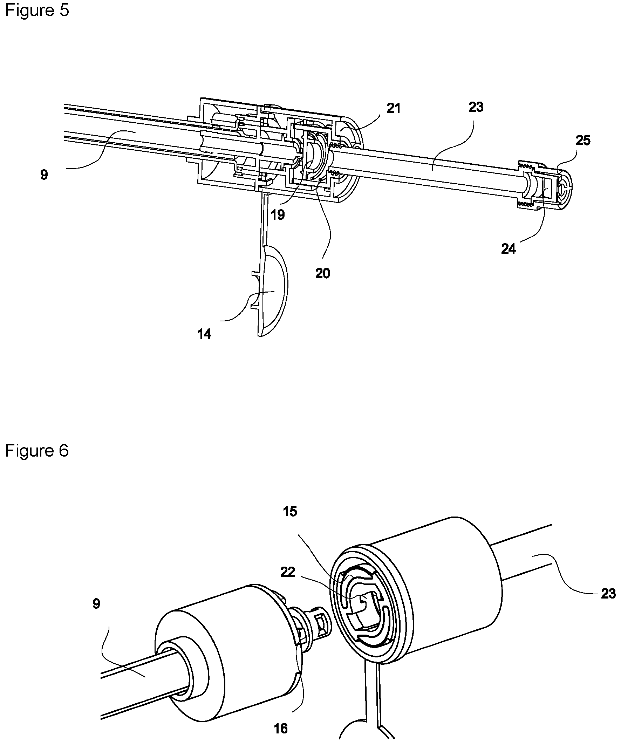

**Figure 5** - is the cross-sectional view showing the state after the inner and outer parts forming the exhaust outlet line are connected in the air purifier in an embodiment of the present invention.
**Figure 6** - is the view showing the connection parts of the inner and outer parts in the air purifier in an embodiment of the present invention.

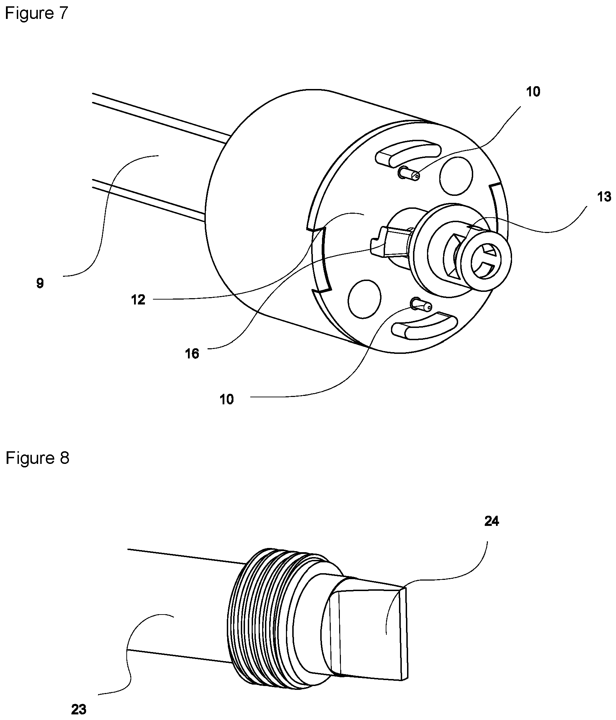

**Figure 7** - is the view of the inner part in the air purifier in an embodiment of the present invention.
**Figure 8** - is the view of the outlet pipe and the duckbill provided at the outlet pipe in the air purifier in an embodiment of the present invention.

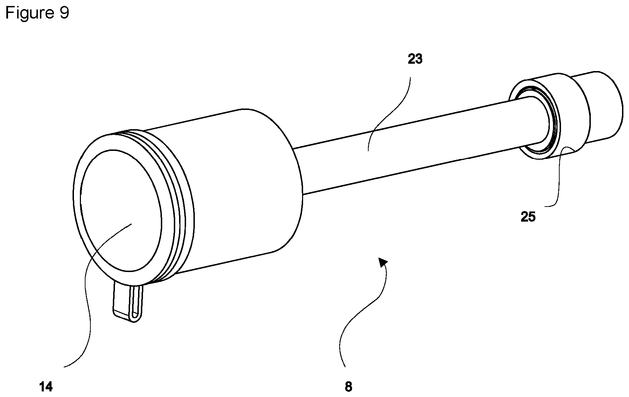

**Figure 9** - is the view of the outer part of the exhaust outlet line in the air purifier in an embodiment of the present invention.

The elements illustrated in the figures are numbered as follows:
1. Air purifier
2. Body
3. CO₂ adsorption unit
4. Receptacle
5. Control unit
6. Exhaust outlet line
7. Inner part
8. Outer part
9. Inlet pipe
10. Pin
11. Pin housing
12. Locking part
13. Pushing part
14. Lid
15. Metal plate
16. Claw
17. Sealing member
18. Interconnecting part
19. Valve cap
20. Spring
21. Valve housing
22. Housing
23. Outlet pipe
24. Duckbill
25. Filter lid
I: Air inlet
O: Clean air outlet

The air purifier (1) comprises a body (2) having an air inlet (I) through which air from an indoor environment is sucked and a fresh air outlet (O) through which the purified air is supplied to the environment; a CO₂ adsorption unit (3) which is provided in the body (2), which can be filled with basic liquid solution and which enables the carbon dioxide in the air to be adsorbed chemically; a receptacle (4) wherein the carbon dioxide adsorbed in the carbonate form in the CO₂ adsorption unit (3) is treated with an acidic solution to be released again; and an exhaust outlet line (6) which enables the carbon dioxide and other waste gases released as a result of the reaction of the carbonate solution in the receptacle (4) with the acidic solution to be discharged from the body (2) to an outer environment.

The air purifier (1) of the present invention further comprises
- the exhaust outlet line (6) comprising an inner part (7) having an inlet pipe (9) extending from the body (2) and through which carbon dioxide and waste gases enter, a locking part (12) attached to the end of the inlet pipe (9) and at least one pin (10) extending outwards from the locking part (12) and an outer part (8) detachably attached to the inner part (7) and having an interconnecting part (18) which can be connected to the locking part (12); a metal plate (15) which is disposed on the interconnecting part (18) and with which the pin (10) can get into contact and an outlet pipe (23) which enables the waste gases to be released to the outside environment; and
- a control unit (5) which detects that the inner part (7) and the outer part (8) are connected to each other as the pin (10) gets into contact with the metal plate (15) and which accordingly starts the air purification process.

In the air purifier of the present invention, the air of the indoor environment desired to be purified is sucked into the body (2). The air sucked into the body (2) is directly taken into the CO₂ adsorption unit (3). First a basic liquid solution is fed here. The basic liquid solution can be directly provided in the CO₂ adsorption unit (3) or can be fed from a base tank disposed in the body (2). In the CO₂ adsorption unit (3), the carbon dioxide in the air is adsorbed by the carbonation reaction. The clean air cleansed of carbon dioxide is released back to the indoor environment through the clean air outlet (O). On the other hand, the carbonate solution is taken into a separate receptacle (4) to be treated with an acidic solution. Here, carbon dioxide and waste gases are released again. In order not to release the carbon dioxide back to the indoor environment, an exhaust outlet line (6) is opened to the outside environment. In the air purifier (1) of the present invention, the exhaust outlet line (6) has a two-piece structure and comprises an inner part (7) and an outer part (8). The inner part (7) is the part which remains inside the window or wall of the room, etc., where the air is purified. On the other hand, the outer part (8) is the part remaining outside the window and the wall, in the outer environment. The inner part (7) comprises an inlet pipe (9) which extends from the body (2) and through which carbon dioxide enters, a locking part (12) which attached to the inlet pipe (9) and at least one pin (10). The outer part (8) comprises an outlet pipe (23), an interconnecting part (18) which can be detachably connected to the locking part (12), and a metal plate (15) which is disposed on the interconnecting part (18). While the air purifier (1) is placed in front of a window, wall, etc., the inner part (7) is attached to the interconnecting part (18) by means of the locking part (12). At the same time, if a correct locking is performed, the pin (10) gets into contact with the metal plate (15) on the interconnecting part (18). Thus, the control unit (5) detects that the inner part (7) and the outer part (8) are correctly connected to each other and starts the air purification process of the air purifier (1). Otherwise, the control unit (5) does not start the air purification process and undesirable situations such as the release of waste gases to the indoor environment are prevented.

In an embodiment of the present invention, the air purifier (1) comprises at least one claw (16) which is provided on the locking part (12) and a housing (22) which is provided on the interconnecting part (18) and which is suitable for receiving and locking the claw (16). In this embodiment, the claw (16) is fitted into the housing (22) and locked, and the locking part (12) and the interconnecting part (18) are enabled to be securely locked to each other.

In an embodiment of the present invention, the air purifier (1) comprises the pin (10) one end of which is connected to the control unit (5) by means of a cable extending from the inlet pipe (9) and a pin housing (11) which is provided on the locking part (12) and through which the pin (10) passes while the inner part (7) and the outer part (8) are connected to each other.

In an embodiment of the present invention, the air purifier (1) comprises a pushing part (13) which is provided on the locking part (12); a valve cap (19) which is disposed on the interconnecting part (18); a spring (20) which is fitted on the valve cap (19) so as to move the valve cap (19) towards the outlet pipe (23) by the force applied by the pushing part (13), and a valve housing (21) which connects the valve cap (19), the spring (20) and the interconnecting part (18) to the outlet pipe (23). Thus, when the inner part (7) and the outer part (8) are connected to each other, flow is provided for the passage of waste gases by pushing the valve cap (19) and the spring (20) towards the outlet pipe (23), and carbon dioxide passage is allowed from the inlet pipe (9) to the outlet pipe (23).

In an embodiment of the present invention, the air purifier (1) comprises a sealing member (17) which is disposed between the locking part (12) and the interconnecting part (18) and which prevents the waste gases from leaking to the indoor environment.

In an embodiment of the present invention, the air purifier (1) comprises the sealing member (17) which is disposed between the valve cap (19) and the interconnecting part (18) and which prevents the waste gases from leaking to the indoor environment.

In an embodiment of the present invention, the air purifier (1) comprises a duckbill (24) which is disposed on the outlet pipe (23) so as to prevent foreign substances which may enter the outlet pipe (23) from the outside environment during the waste gas discharge.

In an embodiment of the present invention, the air purifier (1) comprises a lid (14) which can be attached to the interconnecting part (18) so as to cover the interconnecting part (18) in order to prevent the entry of foreign materials into the outer part (8) before the inner part (7) and outer part (8) are connected to each other.

In an embodiment of the present invention, the air purifier (1) comprises a filter lid (25) which is attached on the outlet pipe (23) at the outer end of the outlet pipe (23) and on the duckbill (24) and which ensures that the waste gas flow is unidirectional from the indoor environment to the outside environment.

By means of the present invention, an air purifier (1) is realized, which does not start the air purification process until the exhaust outlet line (6) is installed correctly and which effectively purify the indoor air and discharge the waste gases to the outside environment.

## Claims

1. An air purifier (1) **comprising** a body (2) having an air inlet (I) through which air from an indoor environment is sucked and a fresh air outlet (O) through which the purified air is supplied to the environment; a CO₂ adsorption unit (3) which is provided in the body (2), which can be filled with basic liquid solution and which enables the carbon dioxide in the air to be adsorbed chemically; a receptacle (4) wherein the carbon dioxide adsorbed in the carbonate form in the CO₂ adsorption unit (3) is treated with an acidic solution to be released again; and an exhaust outlet line (6) which enables the carbon dioxide and other waste gases released as a result of the reaction of the carbonate solution in the receptacle (4) with the acidic solution to be discharged from the body (2) to an outer environment, **characterized by**
- the exhaust outlet line (6) comprising an inner part (7) having an inlet pipe (9) extending from the body (2) and through which carbon dioxide and waste gases enter, a locking part (12) attached to the end of the inlet pipe (9) and at least one pin (10) extending outwards from the locking part (12) and an outer part (8) detachably attached to the inner part (7) and having an interconnecting part (18) which can be connected to the locking part (12); a metal plate (15) which is disposed on the interconnecting part (18) and with which the pin (10) can get into contact and an outlet pipe (23) which enables the waste gases to be released to the outside environment; and
- a control unit (5) which detects that the inner part (7) and the outer part (8) are connected to each other as the pin (10) gets into contact with the metal plate (15) and which accordingly starts the air purification process.

2. An air purifier (1) as in Claim 1, **characterized by** at least one claw (16) which is provided on the locking part (12) and a housing (22) which is provided on the interconnecting part (18) and which is suitable for receiving and locking the claw (16).

3. An air purifier (1) as in Claim 1 or 2, **characterized by** the pin (10) one end of which is connected to the control unit (5) by means of a cable extending from the inlet pipe (9) and a pin housing (11) which is provided on the locking part (12) and through which the pin (10) passes while the inner part (7) and the outer part (8) are connected to each other.

4. An air purifier (1) as in any one of Claims 1 to 3, **characterized by** a pushing part (13) which is provided on the locking part (12); a valve cap (19) which is disposed on the interconnecting part (18); a spring (20) which is fitted on the valve cap (19) so as to move the valve cap (19) towards the outlet pipe (23) by the force applied by the pushing part (13), and a valve housing (21) which connects the valve cap (19), the spring (20) and the interconnecting part (18) to the outlet pipe (23).

5. An air purifier (1) as in any one of Claims 1 to 4, **characterized by** a sealing member (17) which is disposed between the locking part (12) and the interconnecting part (18) and which prevents the waste gases from leaking to the indoor environment.

6. An air purifier (1) as in Claim 4 or 5, **characterized by** a sealing member (17) which is disposed between the valve cap (19) and the interconnecting part (18) and which prevents the waste gases from leaking to the indoor environment.

7. An air purifier (1) as in any one of the above claims, **characterized by** a duckbill (24) which is disposed on the outlet pipe (23) so as to prevent foreign substances which may enter the outlet pipe (23) from the outside environment during the waste gas discharge.

8. An air purifier (1) as in any one of the above claims, **characterized by** a lid (14) which can be attached to the interconnecting part (18) so as to cover the interconnecting part (18) in order to prevent the entry of foreign materials into the outer part (8) before the inner part (7) and outer part (8) are connected to each other.

9. An air purifier (1) as in any one of the above claims, **characterized by** a filter lid (25) which is attached on the outlet pipe (23) at the outer end of the outlet pipe (23) and on the duckbill (24) and which ensures that the waste gas flow is unidirectional from the indoor environment to the outside environment.

## Patentansprüche

1. Ein Luftreiniger (1) **umfasst** einen Körper (2) mit einem Lufteinlass (I), durch den Luft aus einer Innenraumumgebung angesaugt wird, und einem Frischluftauslass (O), durch den die gereinigte Luft der Umgebung zugeführt wird; eine CO2-Adsorptionseinheit (3), die in dem Körper (2) vorgesehen ist, die mit einer basischen Flüssigkeitslösung gefüllt werden kann und die es ermöglicht, das Kohlendioxid in der Luft chemisch zu adsorbieren; einen Behälter (4), in dem das in der CO2-Adsorptionseinheit (3) in der Karbonatform adsorbierte Kohlendioxid mit einer sauren Lösung behandelt wird, um wieder freigesetzt zu werden; und eine Abgasauslassleitung (6), die es ermöglicht, dass das Kohlendioxid und andere Abgase, die als Ergebnis der Reaktion der Karbonatlösung in dem Behälter (4) mit der sauren Lösung freigesetzt werden, aus dem Körper (2) in eine äußere Umgebung abgeleitet werden, **gekennzeichnet ist es dadurch, dass**
- die Abgasauslassleitung (6) ein Innenteil (7) mit einem Einlassrohr (9), das sich von dem Körper (2) aus erstreckt und durch das Kohlendioxid und Abgase eintreten, ein Verschlussteil (12), das an dem Ende des Einlassrohrs (9) angebracht ist, und mindestens einen Stift (10), der sich von dem Verschlussteil (12) aus nach außen erstreckt, und ein Außenteil (8) umfasst, das abnehmbar an dem Innenteil (7) angebracht ist und ein Verbindungsteil (18) aufweist, das mit dem Verschlussteil (12) verbunden werden kann; eine Metallplatte (15), die auf dem Verbindungsteil (18) angeordnet ist und mit der der Stift (10) in Kontakt kommen kann, und ein Auslassrohr (23), das es ermöglicht, die Abgase in die äußere Umgebung abzugeben; und
- durch eine Steuereinheit (5), die erkennt, dass das Innenteil (7) und das Außenteil (8) miteinander verbunden sind, wenn der Stift (10) mit der Metallplatte (15) in Kontakt kommt, und die dementsprechend den Luftreinigungsprozess startet.

2. Ein Luftreiniger (1) wie in Anspruch 1 aufgeführt, **ist dadurch gekennzeichnet, dass** mindestens eine Klaue (16) an dem Verriegelungsteil (12) vorgesehen ist und ein Gehäuse (22) an dem Verbindungsteil (18) vorgesehen ist, das zur Aufnahme und Verriegelung der Klaue (16) geeignet ist.

3. Ein Luftreiniger (1) wie in Anspruch 1 oder 2 aufgeführt, **ist dadurch gekennzeichnet, dass** der Stift (10), dessen eines Ende mit der Steuereinheit (5) mittels eines vom Einlassrohr (9) ausgehenden Kabels verbunden ist, und ein Stiftgehäuse (11), das am Verschlussteil (12) vorgesehen ist und durch das der Stift (10) hindurchgeht, während der Innenteil (7) und der Außenteil (8) miteinander verbunden sind.

4. Ein Luftreiniger (1) wie in einem der Ansprüche 1 bis 3 aufgeführt, **ist dadurch gekennzeichnet, dass** ein Schiebeteil (13), das auf dem Verriegelungsteil (12) vorgesehen ist; eine Ventilkappe (19), die auf dem Verbindungsteil (18) angeordnet ist; eine Feder (20), die auf der Ventilkappe (19) angebracht ist, um die Ventilkappe (19) durch die von dem Schiebeteil (13) aufgebrachte Kraft in Richtung des Auslassrohrs (23) zu bewegen, und ein Ventilgehäuse (21), das die Ventilkappe (19), die Feder (20) und das Verbindungsteil (18) mit dem Auslassrohr (23) verbindet.

5. Ein Luftreiniger (1) wie in einem der Ansprüche 1 bis 4 aufgeführt, **ist dadurch gekennzeichnet, dass** ein Dichtungselement (17), das zwischen dem Verschlussteil (12) und dem Verbindungsteil (18) angeordnet ist und verhindert, dass die Abgase in die Innenumgebung entweichen.

6. Ein Luftreiniger (1) wie in Anspruch 4 oder 5 aufgeführt, **ist dadurch gekennzeichnet, dass** ein Dichtungselement (17) zwischen der Ventilkappe (19) und dem Verbindungsteil (18) angeordnet ist, das verhindert, dass die Abgase in die Innenraumumgebung entweichen.

7. Ein Luftreiniger (1) wie in einem der vorherigen Ansprüchen aufgeführt, **ist dadurch gekennzeichnet, dass** ein Entenschnabel (24), der auf dem Auslassrohr (23) angeordnet ist, um zu verhindern, dass während der Abgasableitung Fremdstoffe aus der äußeren Umgebung in das Auslassrohr (23) gelangen können.

8. Ein Luftreiniger (1) wie in einem der vorherigen Ansprüchen aufgeführt, **ist dadurch gekennzeichnet, dass** ein Deckel (14) an dem Verbindungsteil (18) befestigt werden kann, um das Verbindungsteil (18) abzudecken, um das Eindringen von Fremdstoffen in das Außenteil (8) zu verhindern, bevor das Innenteil (7) und das Außenteil (8) miteinander verbunden werden.

9. Ein Luftreiniger (1) wie in einem der vorherigen Ansprüchen aufgeführt, **ist dadurch gekennzeichnet, dass** ein Filterdeckel (25) auf dem Auslassrohr (23) am äußeren Ende des Auslassrohrs (23) und auf dem Entenschnabel (24) angebracht ist und der dafür sorgt, dass der Abgasstrom in eine Richtung von der Innenumgebung zur Außenumgebung fließt.

## Revendications

1. Un purificateur d'air (1) **comprenant** un corps (2) ayant une entrée d'air (I) par laquelle l'air d'un environnement intérieur est aspiré et une sortie d'air frais (O) par laquelle l'air purifié est libéré à l'environnement ; une unité d'adsorption de CO₂ (3) qui est prévue dans le corps (2), qui peut être remplie avec une solution liquide basique et qui permet au dioxyde de carbone dans l'air d'être adsorbé chimiquement ; un réceptacle (4) dans lequel le dioxyde de carbone adsorbé sous forme de carbonate dans l'unité d'adsorption du CO₂ (3) est traité avec une solution acide pour être à nouveau libéré ; et une conduite de sortie d'échappement (6) qui permet au dioxyde de carbone et aux autres gaz résiduels libérés à la suite de la réaction de la solution de carbonate dans le réceptacle (4) avec la solution acide d'être évacués du corps (2) vers un environnement extérieur, **caractérisé par**
- la conduite de sortie d'échappement (6) comprenant une partie intérieure (7) ayant un tuyau d'entrée (9) s'étendant à partir du corps (2) et par lequel le dioxyde de carbone et les gaz d'échappement pénètrent, une partie de verrouillage (12) fixée à l'extrémité du tuyau d'entrée (9) et au moins une broche (10) s'étendant vers l'extérieur de la partie de verrouillage (12) et une partie extérieure (8) fixée de manière amovible à la partie intérieure (7) et ayant une partie d'interconnexion (18) qui peut être connectée à la partie de verrouillage (12) ; une plaque métallique (15) qui est disposée sur la partie d'interconnexion (18) et avec laquelle la broche (10) peut entrer en contact, et un tuyau de sortie (23) qui permet aux gaz d'échappement d'être libérés dans l'environnement extérieur ; et
- une unité de commande (5) qui détecte que la partie intérieure (7) et la partie extérieure (8) sont connectées l'une à l'autre lorsque la broche (10) entre en contact avec la plaque métallique (15) et qui démarre en conséquence le processus de purification de l'air.

2. Un purificateur d'air (1) selon la Revendication 1, **caractérisé par** au moins une griffe (16) qui est prévue sur la partie de verrouillage (12) et un boîtier (22) qui est prévu sur la partie d'interconnexion (18) et qui est adapté pour recevoir et verrouiller la griffe (16).

3. Un purificateur d'air (1) selon la Revendication 1 ou 2, **caractérisé par** la broche (10) dont une extrémité est reliée à l'unité de commande (5) au moyen d'un câble s'étendant à partir du tuyau d'entrée (9) et un logement de broche (11) qui est prévu sur la partie de verrouillage (12) et à travers lequel la broche (10) passe tandis que la partie intérieure (7) et la partie extérieure (8) sont reliées l'une à l'autre.

4. Un purificateur d'air (1) selon l'une quelconque des Revendications 1 à 3, **caractérisé par** une partie de poussée (13) qui est placée sur la partie de verrouillage (12) ; un capuchon de valve (19) qui est placé sur la partie d'interconnexion (18) ; un ressort (20) qui est monté sur le capuchon de valve (19) de manière à déplacer le capuchon de valve (19) vers le tuyau de sortie (23) sous l'effet de la force appliquée par la partie de poussée (13), et un boîtier de valve (21) qui relie le capuchon de valve (19), le ressort (20) et la partie d'interconnexion (18) au tuyau de sortie (23).

5. Un purificateur d'air (1) selon l'une quelconque des Revendications 1 à 4, **caractérisé par** un élément d'étanchéité (17) qui est disposé entre la partie de verrouillage (12) et la partie d'interconnexion (18) et qui empêche les gaz d'échappement de s'échapper dans l'environnement intérieur.

6. Un purificateur d'air (1) selon la Revendication 4 ou 5, **caractérisé par** un élément d'étanchéité (17) qui est disposé entre le capuchon de valve (19) et la partie d'interconnexion (18) et qui empêche les gaz d'échappement de s'échapper dans l'environnement intérieur.

7. Un purificateur d'air (1) selon l'une quelconque des revendications précédentes, **caractérisé par** un bec de canard (24) qui est disposé sur le tuyau de sortie (23) de manière à empêcher les substances étrangères de pénétrer dans le tuyau de sortie (23) depuis l'environnement extérieur pendant l'évacuation des gaz d'échappement.

8. Un purificateur d'air (1) selon l'une quelconque des revendications précédentes, **caractérisé par** un couvercle (14) qui peut être fixé à la partie d'interconnexion (18) de manière à couvrir la partie d'interconnexion (18) afin d'empêcher l'entrée de matières étrangères dans la partie extérieure (8) avant que la partie intérieure (7) et la partie extérieure (8) ne soient reliées l'une à l'autre.

9. Un purificateur d'air (1) selon l'une quelconque des revendications précédentes, **caractérisé par** un couvercle de filtre (25) qui est fixé sur le tuyau de sortie (23) à l'extrémité extérieure du tuyau de sortie (23) et sur le bec de cane (24) et qui garantit que le flux de gaz d'échappement est unidirectionnel de l'environnement intérieur vers l'environnement extérieur.
